(19) Europäisches Patentamt
European Patent Office
Office européen des brevets

(11) Veröffentlichungsnummer: **0 013 751**
B1

# (12) EUROPÄISCHE PATENTSCHRIFT

(45) Veröffentlichungstag der Patentschrift: **15.09.82**

(51) Int. Cl.³: **D 21 H 3/80,** C 09 B 23/10, C 09 B 23/14

(21) Anmeldenummer: **79105327.5**

(22) Anmeldetag: **21.12.79**

(54) **Verwendung von quaternierten Verbindungen zum Färben von Papierstoffen.**

(30) Priorität: **18.01.79 DE 2901845**

(43) Veröffentlichungstag der Anmeldung: **06.08.80 Patentblatt 80/16**

(45) Bekanntmachung des Hinweises auf die Patenterteilung: **15.09.82 Patentblatt 82/37**

(84) Benannte Vertragsstaaten: **BE CH DE FR GB IT**

(56) Entgegenhaltungen:
**DE-A-2 047 431**
**US-A-2 465 412**

(73) Patentinhaber: **BASF Aktiengesellschaft, Carl-Bosch-Strasse 38, D-6700 Ludwigshafen (DE)**

(72) Erfinder: **Degen, Hans-Juergen, Dr., Schillerstrasse 6, D-6143 Lorsch (DE)**
Erfinder: **Grychtol, Klaus, Dr., Seebacher Strasse 96A, D-6702 Bad Duerkheim 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

Verwendung von quaternierten Verbindungen zum Färben von Papierstoffen

Die Erfindung betrifft ein Verfahren zum Färben von Papierstoffen, das dadurch gekennzeichnet ist, daß man Verbindungen der allgemeinen Formel I

$$A^1 = CH - B - CH = A^2 \qquad (I)$$

verwendet,
in der

$A^1$ und $A^2$ der Rest einer quaternierten methylenaktiven Verbindung und
B ein Brückenglied sind.

Die Reste der methylenaktiven Verbindungen sind quaternierte heterocyclische Reste, deren methylenaktive Gruppe $CH_3-$ oder

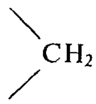

ist. Sie entstammen vorwiegend der gegebenenfalls anellierten Pyridinium- oder Pyryliumreihe oder von quaternierten Benzthiazolen, Benzimidazolen, Indoleninen, Chinoxalonen oder Pyrimidonen.

Im einzelnen seien beispielsweise folgende Verbindungen der Formeln $A^1H_2$ oder $A^2H_2$ angeführt:

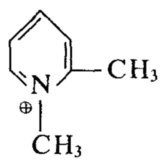 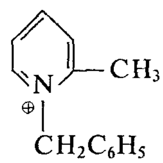 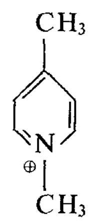 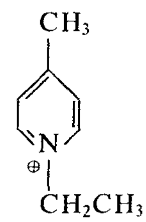 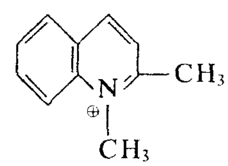

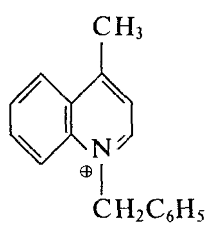 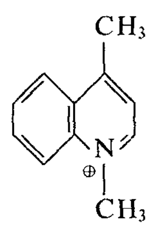 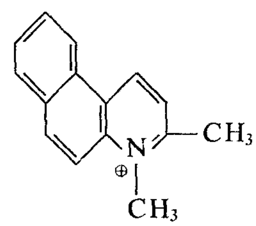 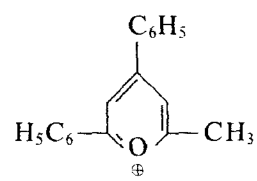

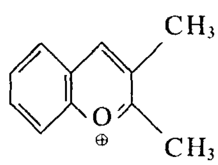 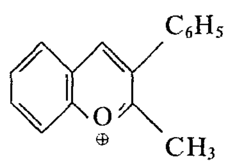 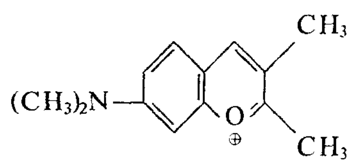

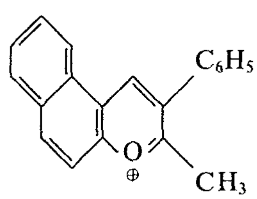 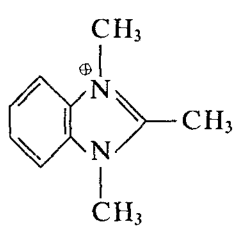 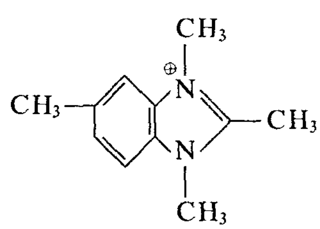

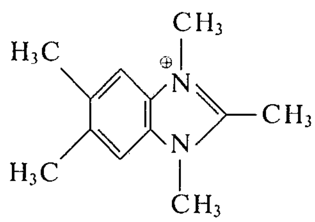
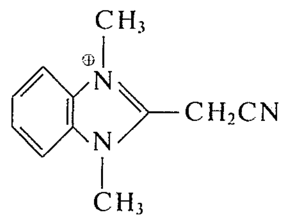
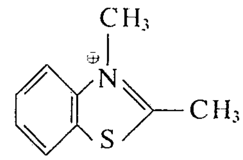

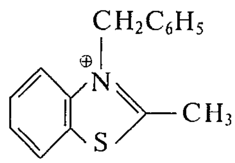
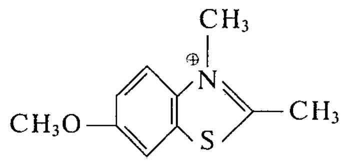
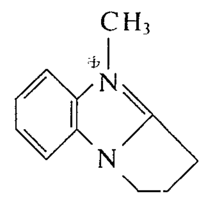

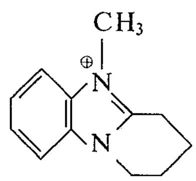
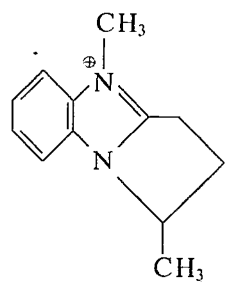
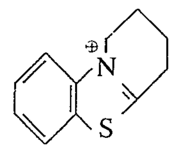
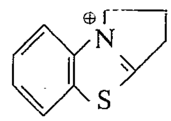

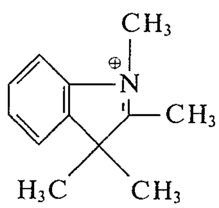
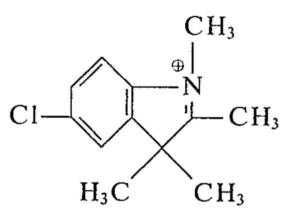
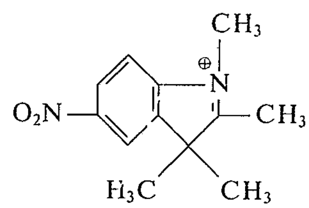

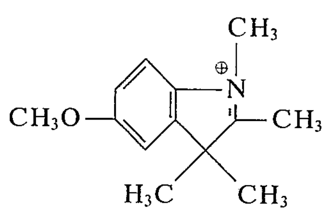
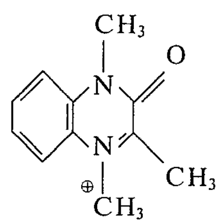
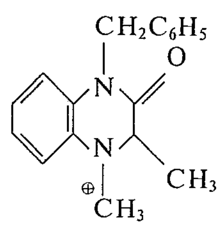

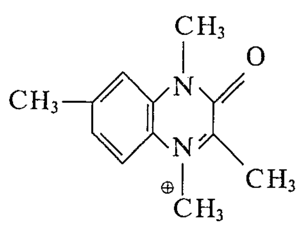
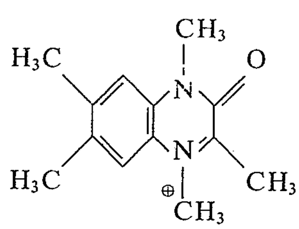

und

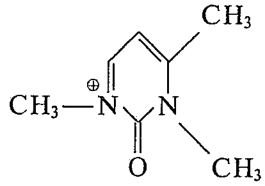

Die Brückenglieder B stammen von aromatischen oder heterocyclischen Bisaldehyden, vorwiegend der Benzolreihe, die noch übliche Substituenten, wie Chlor, Methyl, Methoxy oder Äthoxy tragen können. Einzelne Reste B sind beispielsweise:

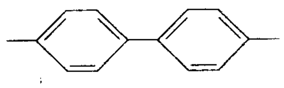

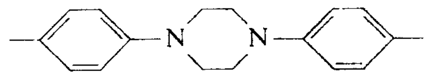

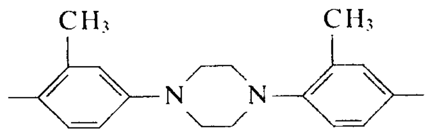

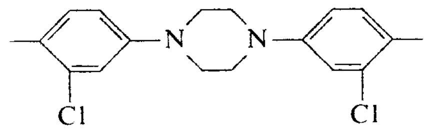

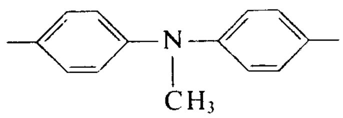

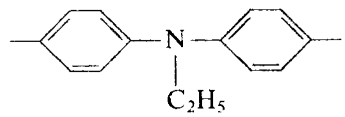

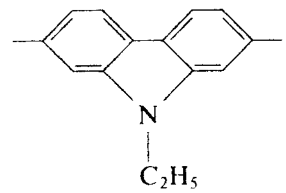

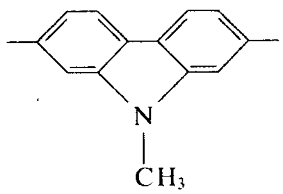

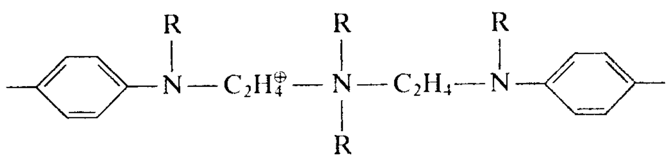

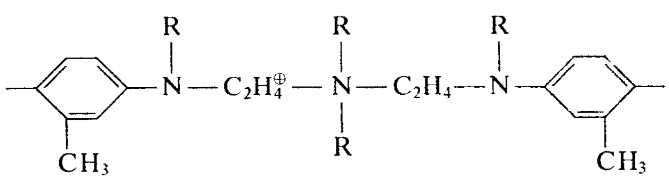

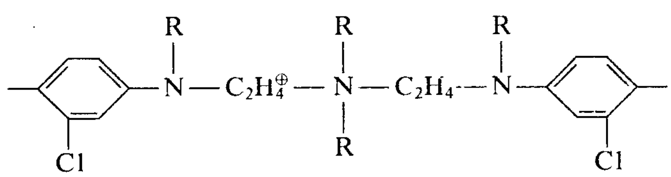

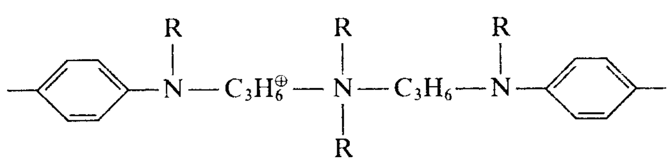

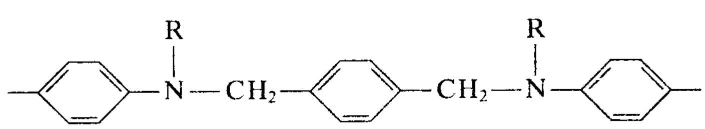

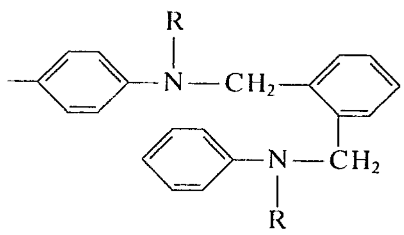

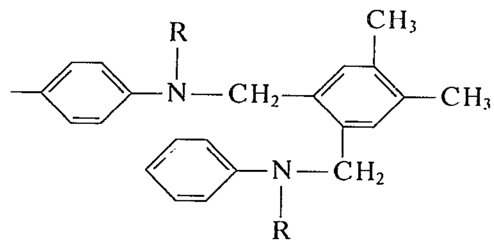

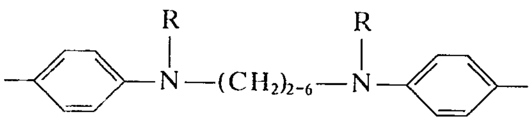

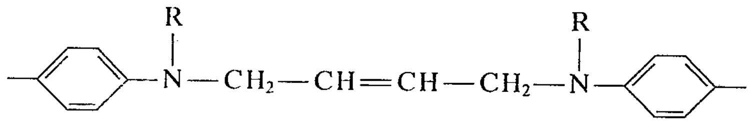

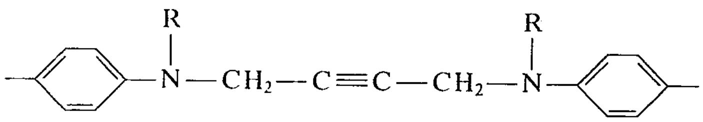

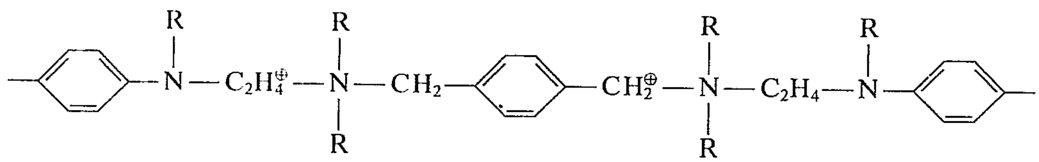

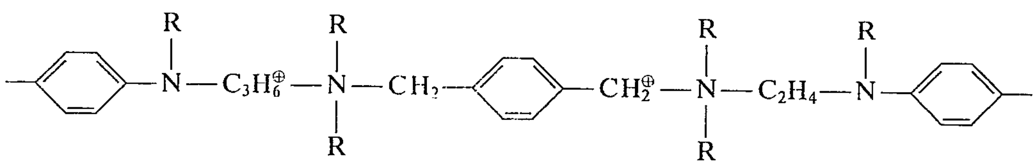

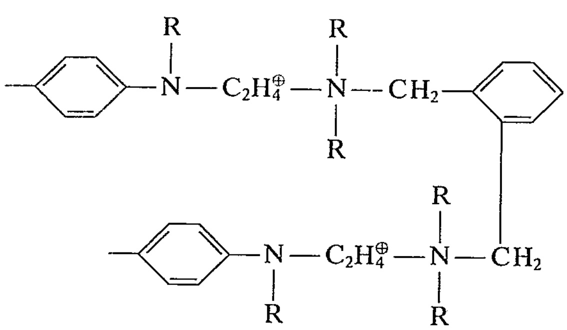

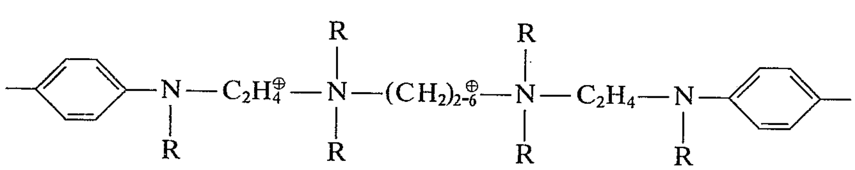

und

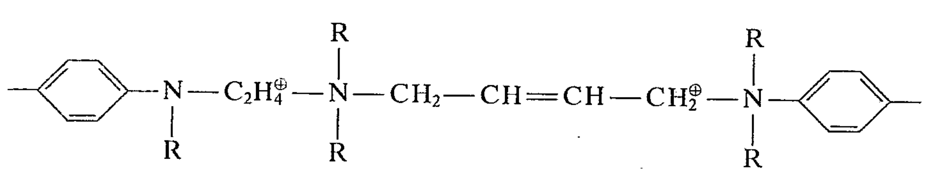

wobei R $C_1$- bis $C_4$-Alkyl, $\beta$-Hydroxyäthyl, $\beta$-Cyanäthyl oder Benzyl bedeutet.

Zur Herstellung der Verbindungen der Formel I kann man Verbindungen der Formel $A^1H_2$ und $A^2H_2$, die gleich oder verschieden sein können, mit Bisaldehyden der Formel

$$OHC-B-CHO$$

in an sich bekannter Weise umsetzen.

Einzelheiten der Reaktionen können den Beispielen entnommen werden, in denen sich Angaben über Teile und Prozente, sofern nicht anders vermerkt, auf das Gewicht beziehen.

Die Verbindungen der Formel I eignen sich insbesondere zum Färben von geleimten und ungeleimten Papieren in der Masse, wobei die Affinitäten sowohl zu ligninhaltigen (holzschliffhaltigen) als auch ligninfreien Papiermassen hoch sind. Die Farbstoffe sind größtenteils substantiv, das Abwasser nach der Färbung ist farblos bis nahezu farblos. Die erzielbaren Nuancen liegen zwischen Gelb und Blau.

Von besonderer Bedeutung sind Verbindungen der Formel I, bei denen $A^1$ und/oder $A^2$ aus der Chinolinium-, γ-Picolinium-, Indolinium-, Benzthiazolium- und Chinoxaloniumreihe stammen und die Reste B den Formeln

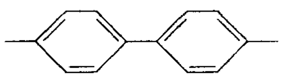

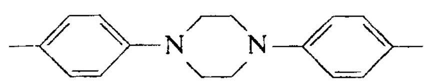

oder

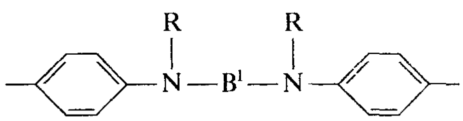

entsprechen, wobei

$B^1$ einen Alkylen- oder Aralkylenrest bedeutet und
R die angegebene Bedeutung hat.

Bevorzugte Reste $B^1$ sind z. B.

$-(CH_2)_{2-6}$ oder 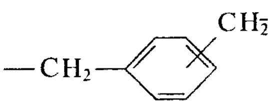 .

Verbindungen der Formel I sind schon aus der US-A-2 465 412 für photographische Zwecke und aus der DE-A-2 047 431 zum Färben von Acrylnitrilpolymerisaten bekannt. Es war überraschend und nicht vorherzusehen, daß sich die Verbindungen der Formel I sehr gut zum Färben von Papierstoffen eignen und daß man sowohl mit ligninhaltigen als auch ligninfreien Papiermassen sehr gute Baderschöpfung erzielt.

## Beispiel 1

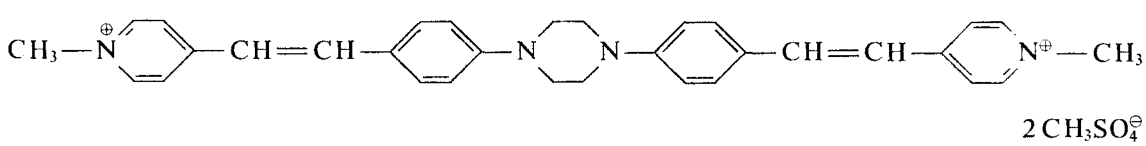

14,7 Teile Diphenylpiperazindialdehyd und 22 Teile 1,4-Dimethylpyridinium-methylsulfat werden in 100 Teilen Äthylenglycolmonomethyläther in Gegenwart von zwei Teilen Piperidin zwei Stunden unter Rückfluß gekocht. Man saugt nach dem Abkühlen ab und wäscht mit Methanol.

Ausbeute: 12 Teile.

Der Farbstoff färbt Papier in der Masse orange. Hervorzuheben ist die Farbstärke, die Brillanz und die sehr geringe Abwasserfärbung bei gebleichten Stoffen.

Farbstoffe mit ähnlich guten Eigenschaften werden mit den folgenden methylenaktiven Komponenten erhalten. Der Farbton bezieht sich wieder auf gebleichte Stoffe.

| | | |
|---|---|---|
| 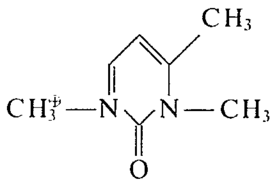 | $HSO_4^{\ominus}$ | violett |
| 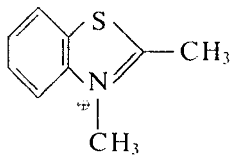 | $CH_3SO_4^{\ominus}$ | rot |
| 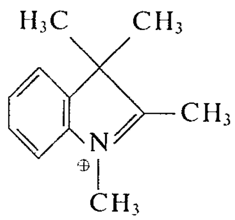 | $CH_3SO_4^{\ominus}$ | blaustichigrot |
| 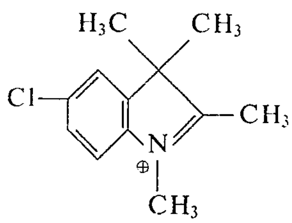 | $CH_3SO_4^{\ominus}$ | violett |
| 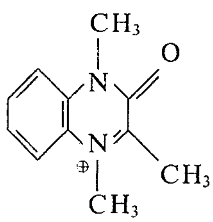 | $CH_3SO_4^{\ominus}$ | blau |
| 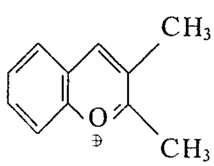 | $ZnCl_3^{\ominus}$ | blau |

Beispiel 2

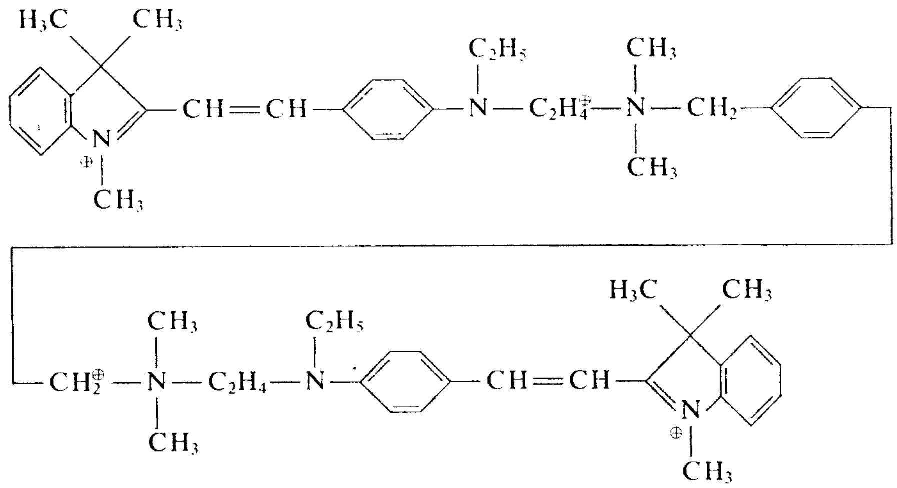

$ZnCl_4^{2\ominus}$, $2\,Cl^{\ominus}$

7,5 Teile des Aldehyds der Formel

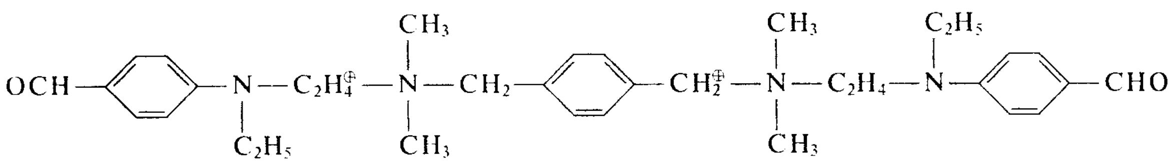

$ZnCl_4^{2\ominus}$

und 3,5 Teile 1,3,3-Trimethyl-2-methylenindolenin werden in 50 Teilen 30prozentiger Essigsäure eine Stunde auf 100° C erwärmt. Man verdünnt mit Wasser und fällt mit Natriumchloridlösung.

Ausbeute: 12 Teile.

Holzhaltige und gebleichte Stoffe werden rot angefärbt. Die Abwasseranfärbung ist gering.

Der obige Aldehyd wird folgendermaßen hergestellt: 96 Teile N-Äthyl-N-$\beta$-dimethylaminoäthylanilin werden in 150 Teilen Aceton gelöst, dazu tropft man 44 Teile p-Xylylendichlorid, gelöst in Aceton. Nach achtstündigem Rückflußkochen wird in der Kälte abgesaugt und getrocknet.

Ausbeute: 123 Teile, Fp. 220 – 222° C.

56 Teile des so erhaltenen verdoppelten Anilinderivates werden in 100 Teilen Dimethylformamid gelöst. Man tropft dann 31 Teile Phosphoroxichlorid so zu, daß eine Temperatur von 70° C nicht überschritten wird. Die Umsetzung wird durch Erhitzen auf 90° C zu Ende gebracht. Durch Eingießen in Wasser wird aufgearbeitet. Der kationische Bisaldehyd wird mit Natrium-Zinkchlorid-Lösung gefällt.

Ausbeute: 46 Teile, Fp. 158 – 160° C.

Durch Verwendung der folgenden heterocyclischen Methylenbasen erhält man ebenfalls gute Papierfarbstoffe:

| | | |
|---|---|---|
| 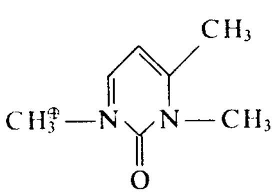 | $HSO_4^{\ominus}$ | rot |
| 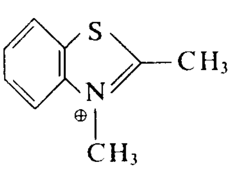 | $CH_3SO_4^{\ominus}$ | orangerot |
| 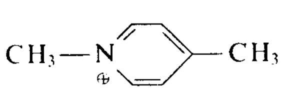 | $CH_3SO_4^{\ominus}$ | orange |

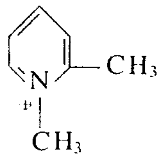 $CH_3SO_4^{\ominus}$ gelb

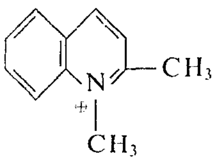 $CH_3SO_4^{\ominus}$ rot

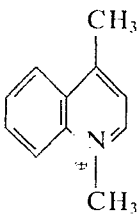 $CH_3SO_4^{\ominus}$ rot

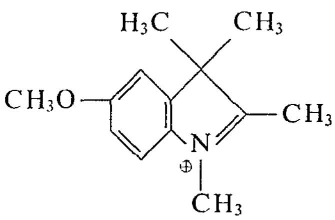 $CH_3SO_4^{\ominus}$ blaustichigrot

Die Quaternierung von N-Äthyl-N-β-dimethylaminoäthylanilin wurde auch mit folgenden Bishalogenverbindungen durchgeführt:

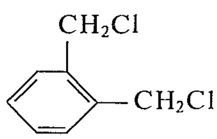 $Cl—CH_2—CH{=}CH—CH_2—Cl$

$Br—CH_2CH_2—Br$ $Br—CH_2CH_2CH_2—Br$ $Br—CH_2CH_2CH_2CH_2—Br$

$Br—CH_2CH_2CH_2CH_2CH_2—Br$

und

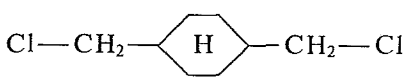

Die aus diesen Zwischenprodukten hergestellten Farbstoffe verhalten sich ähnlich wie die bereits beschriebenen.

Das gilt auch für die Produkte, die man erhält, wenn das verwendete N-Athyl-N-β-dimethyläthylanilin durch folgende Anilinderivate ersetzt wurde:

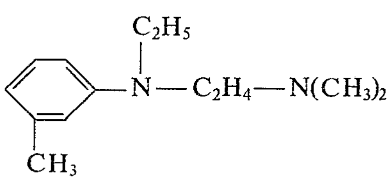 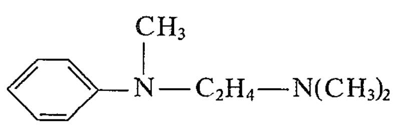

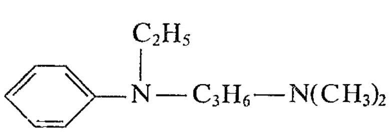 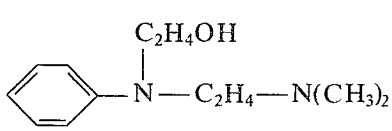

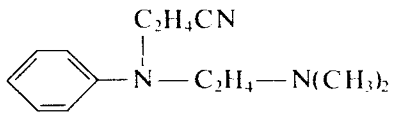

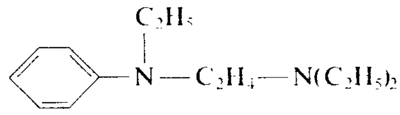

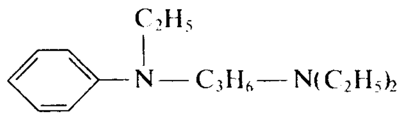

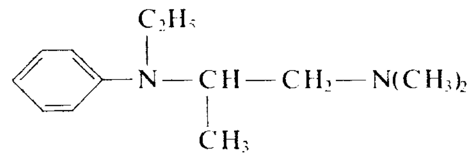

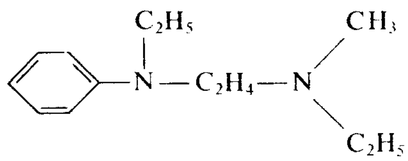

und

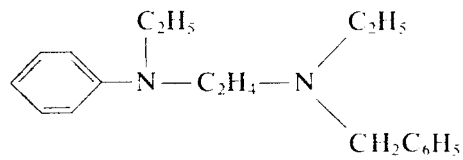

Beispiel 3

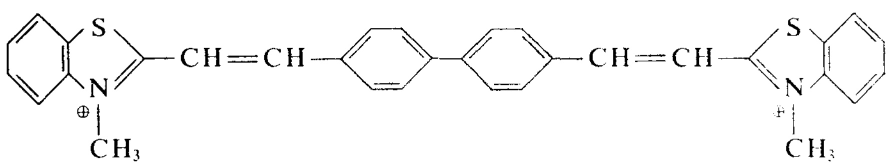

$2\,CH_3SO_4^{\ominus}$

5,2 Teile 4,4'-Diphenyldialdehyd und 13,8 Teile 2,3-Dimethylbenzthiazoliummethylsulfat werden in 50 Teilen Äthanol unter Zusatz von einem ml Piperidin zwei Stunden bei 80° C gehalten. Man kühlt ab und saugt ab.

Ausbeute: 9 Teile.

Holzhaltige und gebleichte Stoffe werden leuchtend goldgelb gefärbt. Im Abwasser verbleiben nur vier bzw. zwei Prozent des verwendeten Farbstoffs. Der Farbstoff ist sehr farbstark.

Ebenso wurden mit den folgenden Komponenten die entsprechenden Farbstoffe erhalten:

| | | |
|---|---|---|
| 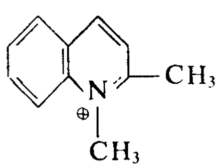 | $CH_3SO_4^{\ominus}$ | leuchtend gelb |
| 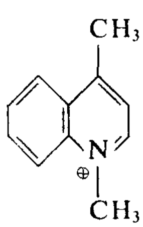 | $CH_3SO_4^{\ominus}$ | gelb |
| 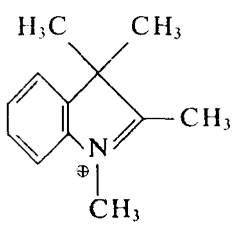 | $CH_3SO_4^{\ominus}$ | orange |
| 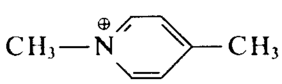 | $CH_3SO_4^{\ominus}$ | grünstichiggelb |

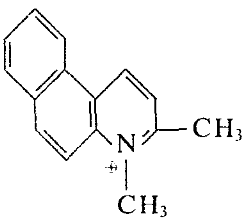 $CH_3SO_4^{\ominus}$ gelb

Beispiel 4

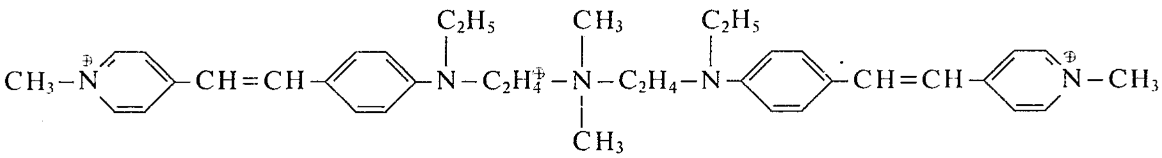

$ZnCl_4^{2\ominus}$, $Cl^{\ominus}$

10,9 Teile 1,4-Dimethylpyridinium-methylsulfat und 11,2 Teile des Aldehyds der Formel

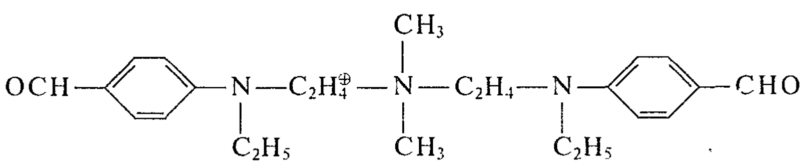 $Cl^{\ominus}$

werden in 100 Teilen Alkohol in Gegenwart von 0,5 Teilen Piperidin zwei Stunden gekocht. Man verdünnt mit Wasser und fällt den Farbstoff durch Zinkchloridzugabe.

Ausbeute: 19 Teile.

Holzhaltige Papiere werden bei gutem Abwasserverhalten rotstichig gelb angefärbt.

Es wurden weiterhin folgende methylenaktive Heterocyclen eingesetzt:

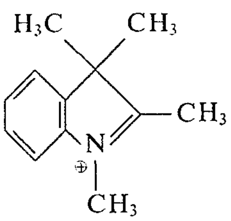 $CH_3SO_4^{\ominus}$ rot

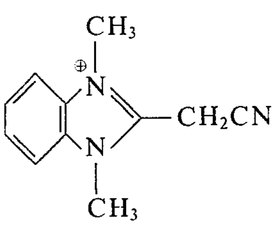 $CH_3SO_4^{\ominus}$ gelb

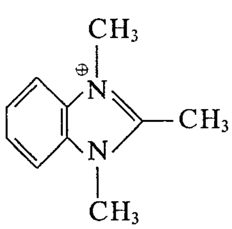 $Cl^{\ominus}$ gelb

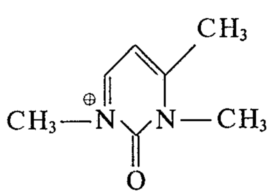 $HSO_4^{\ominus}$ rot

Folgende Aldehyde wurden mit ähnlichen Ergebnissen verwendet: Anion jeweils $Cl^{-}$

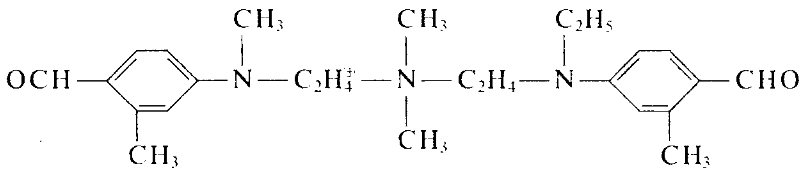

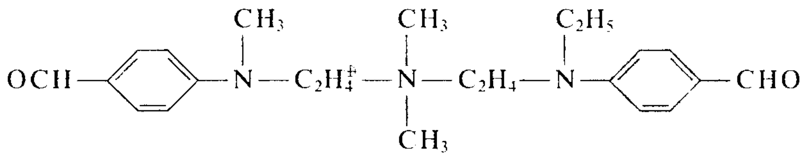

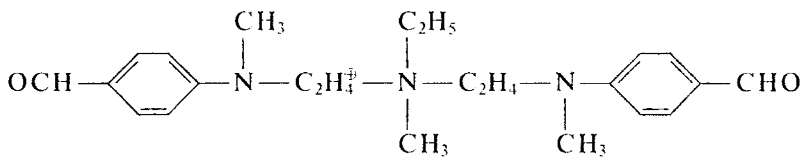

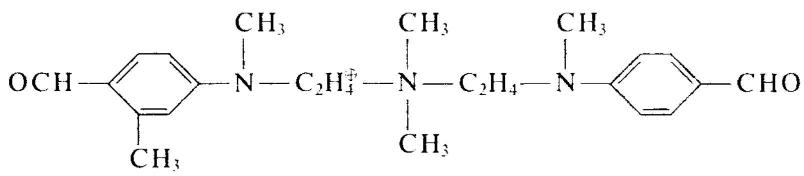

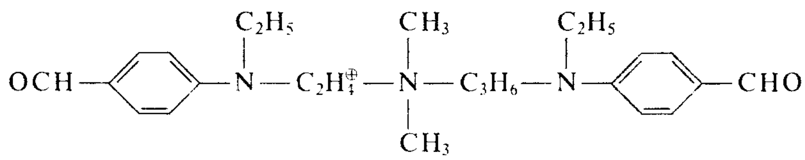

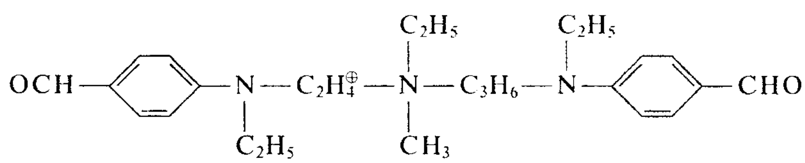

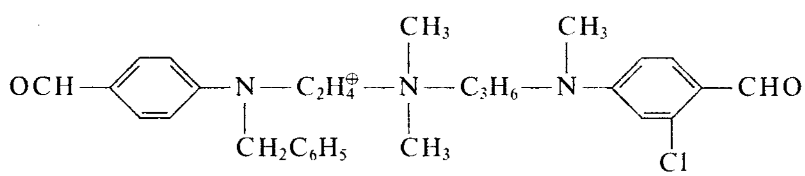

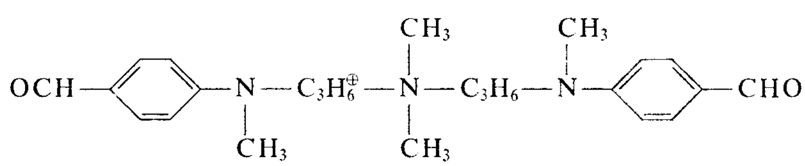

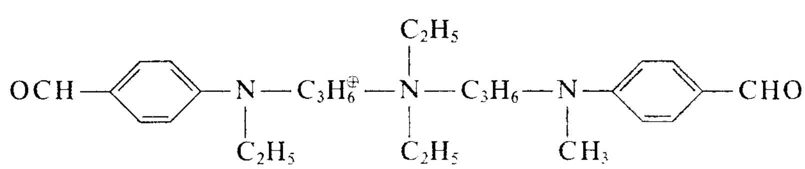

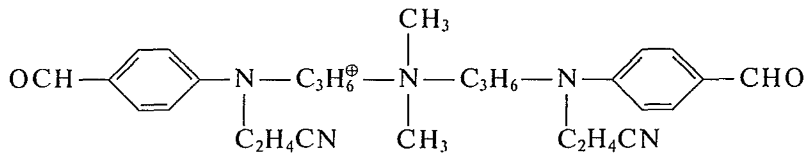

und

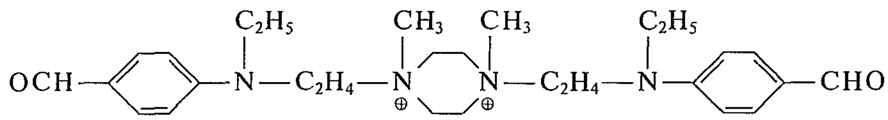

Beispiel 5

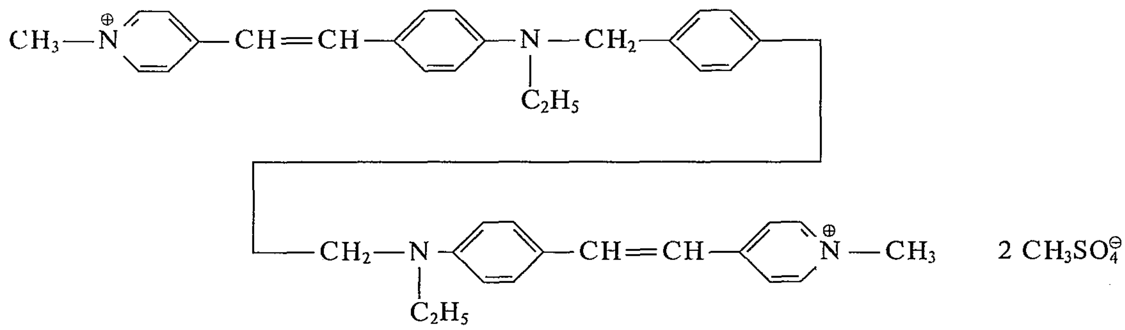

20 Teile des Aldehyds der Formel

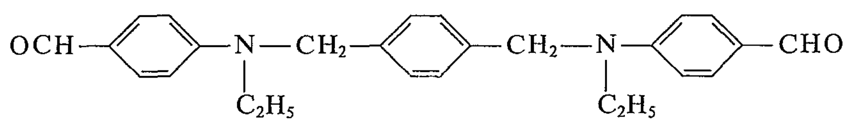

und 31 Teile 1,4-Dimethylpyridiniummethylsulfat werden in 50 Teilen Methylglycol unter Piperidinkatalyse zwei Stunden bei 120° C gerührt. Man verdünnt mit Alkohol und saugt ab.

Ausbeute: 28 Teile.

Holzartige und ligninfreie Stoffe werden bei guter Baderschöpfung orange gefärbt.

Ebenfalls praktisch farblose Abwasser liefern die Farbstoffe aus den folgenden methylenaktiven Komponenten:

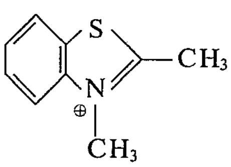 $CH_3SO_4^{\ominus}$ blaustichigrot

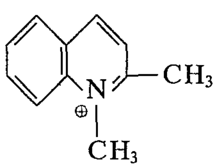 $CH_3SO_4^{\ominus}$ rotviolett

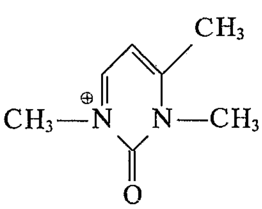 $HSO_4^{\ominus}$ violett

| | | |
|---|---|---|
| 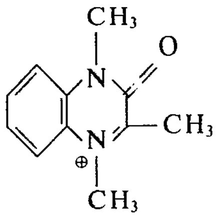 | $CH_3SO_4^{\ominus}$ | blau |
| 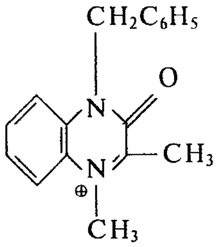 | $Cl^{\ominus}$ | blau |
| 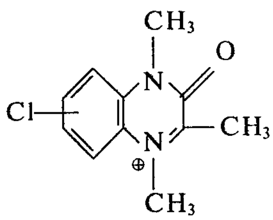 | $CH_3SO_4^{\ominus}$ | blau |
| 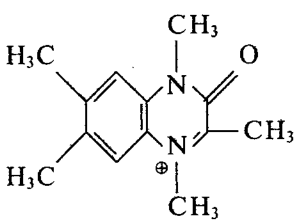 | $CH_3SO_4^{\ominus}$ | blau |
| 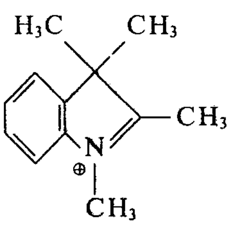 | $CH_3SO_4^{\ominus}$ | rot |
| 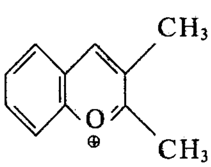 | $ZnCl_3^{\ominus}$ | blau |
| 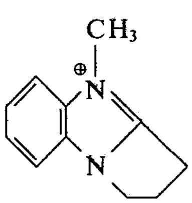 | $CH_3SO_4^{\ominus}$ | gelb |
| 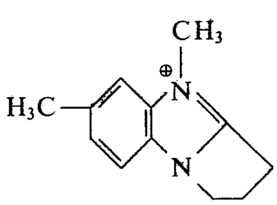 | $CH_3SO_4^{\ominus}$ | gelb |

| | | |
|---|---|---|
| 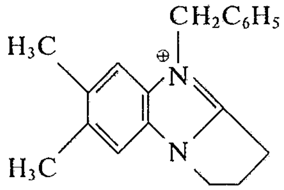 | $Cl^{\ominus}$ | gelb |
| 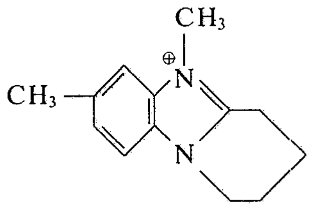 | $CH_3SO_4^{\ominus}$ | gelb |
| 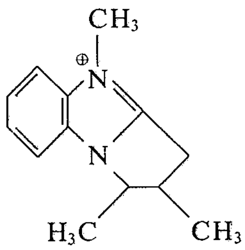 | $CH_3SO_4^{\ominus}$ | gelb |
| 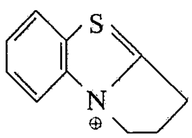 | $Cl^{\ominus}$ | rot |
| 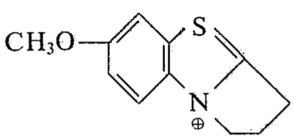 | $Cl^{\ominus}$ | rot |
| 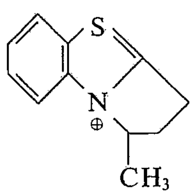 | $Cl^{\ominus}$ | rot |
| 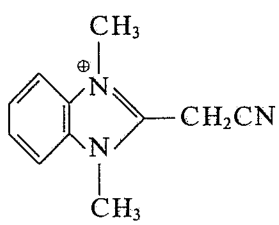 | $Cl^{\ominus}$ | gelb |
| 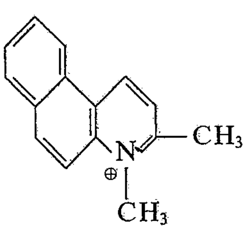 | $CH_3SO_4^{\ominus}$ | rot |

Ebenfalls sehr gut abwasserechte Papierfarbstoffe mit hoher Brillanz werden mit den folgenden Aldehyden erhalten:

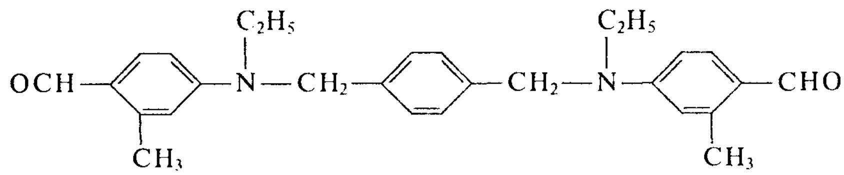

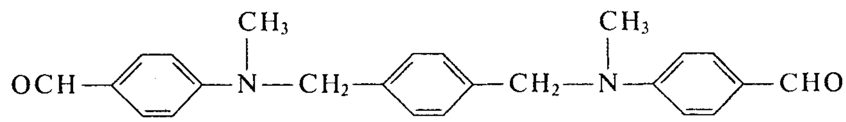

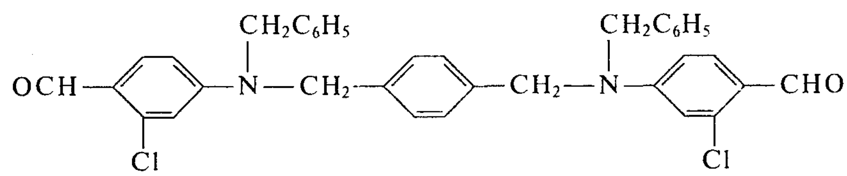

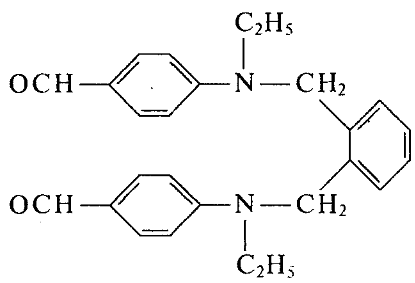

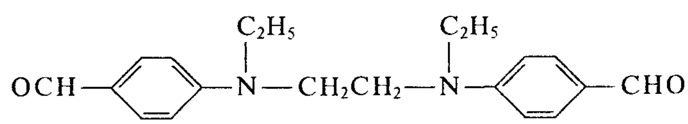

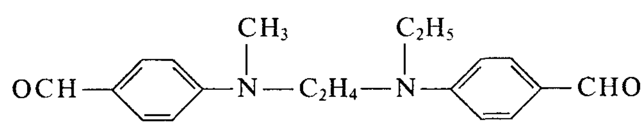

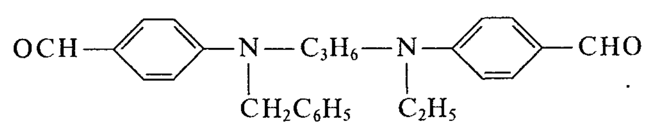

und

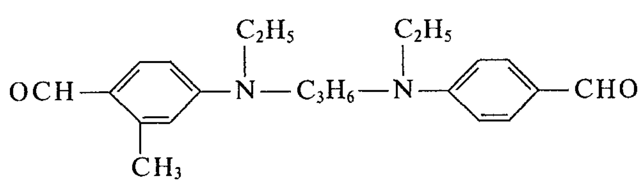

**Patentansprüche**

1. Verfahren zum Färben von Papierstoffen, dadurch gekennzeichnet, daß man Verbindungen der allgemeinen Formel

$$A^1=CH-B-CH=A^2$$

verwendet,
in der

$A^1$ und $A^2$ der Rest einer quaternierten methylenaktiven Verbindung und
B ein Brückenglied

sind.

2. Verfahren gemäß Anspruch 1, dadurch gekennzeichnet, daß man Verbindungen verwendet, bei denen $A^1$ und/oder $A^2$ aus der Chinolinium-, $\gamma$-Picolinium-, Indolinium-, Benzthiazolium- und Chinoxaloniumreihe stammen und die Reste B den Formeln

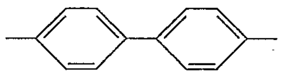

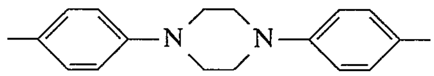

oder

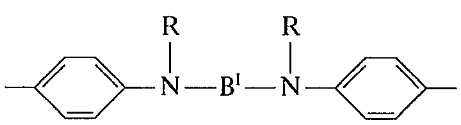

entsprechen, wobei

$B^1$ einen Alkylen- oder Aralkylenrest und
R $C_1$- bis $C_4$-Alkyl, $\beta$-Hydroxyäthyl, $\beta$-Cyanäthyl oder Benzyl bedeuten.

**Claims**

1. A process for colouring paper stock, characterized in that there is used a compound of the general formula

$$A^1=CH-B-CH=A^2$$

where

$A^1$ and $A^2$ are the radical of a quaternized methylene-active compound and
B is a bridge member.

2. A process as claimed in claim 1, characterized in that there is used a compound in which $A^1$ and/or $A^2$ is derived from the quinolinium, Y-picolinium, indolinium, benzthiazolium or quinoxalonium series and the radical B has the formula

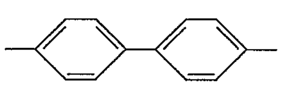

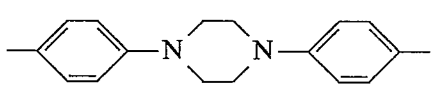

or

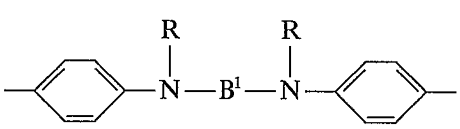

where

$B^1$ is alkylene or aralkylene and
R is $C_1-C_4$-alkyl, $\beta$-hydroxyethyl, $\beta$-cyanoethyl or benzyl.

**Revendications**

1. Procédé pour la coloration dans la masse de pâtes à papier, caractérisé en ce que l'on emploie des composés de la formule générale

$$A^1 = CH - B - CH = A^2,$$

dans laquelle

$A^1$ et $A^2$ représentent chacun le reste d'un composé méthylène-actif quaternisé et
B désigne un groupe pontal.

2. Procédé suivant la revendication 1, caractérisé en ce que l'on emploie des composés, pour lesquels $A^1$ et (ou) $A^2$ proviennent de la série quinolinium, $\gamma$-picolinium, indolinium, benzthiazolium et quinoxalonium et le groupe pontal B possède l'une des formules

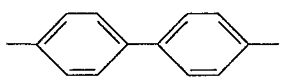

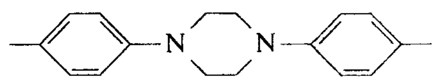

et

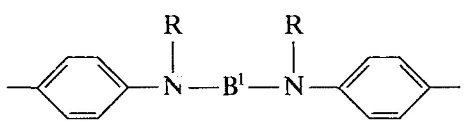

$B^1$ désignant un groupe alcoylène ou aralcoylène et
R un groupe alcoyle en $C_1$ à $C_4$, $\beta$-hydroxy-éthyle, $\beta$-cyan-éthyle ou benzyle.